(19) Europäisches Patentamt / European Patent Office / Office européen des brevets

(11) **EP 2 979 222 B1**

(12) **FASCICULE DE BREVET EUROPEEN**

(45) Date de publication et mention
de la délivrance du brevet:
**09.10.2019 Bulletin 2019/41**

(21) Numéro de dépôt: **14717158.1**

(22) Date de dépôt: **20.03.2014**

(51) Int Cl.:
*G06F 16/174* *(2019.01)*     *G06F 3/06* *(2006.01)*
*G06F 11/14* *(2006.01)*

(86) Numéro de dépôt international:
**PCT/FR2014/050653**

(87) Numéro de publication internationale:
**WO 2014/154973 (02.10.2014 Gazette 2014/40)**

(54) **PROCÉDÉ DE STOCKAGE DE DONNÉES DANS UN SYSTÈME INFORMATIQUE EFFECTUANT UNE DEDUPLICATION DE DONNÉES**

VERFAHREN ZUM SPEICHERN VON DATEN IN EINEM COMPUTERSYSTEM ZUR DURCHFÜHRUNG EINER DATEN-ENTDUPLIZIERUNG

METHOD FOR STORING DATA IN A COMPUTER SYSTEM PERFORMING DATA DEDUPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2013 FR 1352798**

(43) Date de publication de la demande:
**03.02.2016 Bulletin 2016/05**

(73) Titulaire: **Orange**
**75015 Paris (FR)**

(72) Inventeurs:
• **OBAME MEYE, Pierre**
**75015 Paris (FR)**

• **RAIPIN PARVEDY, Philippe**
**35140 Saint Ouen Des Alleux (FR)**

(56) Documents cités:
**EP-A1- 2 518 647     WO-A2-2012/158654**

• **DANNY HARNIK ET AL: "Side Channels in Cloud Services: Deduplication in Cloud Storage", SECURITY & PRIVACY, IEEE, IEEE SERVICE CENTER, LOS ALAMITOS, CA, US, vol. 8, no. 6, novembre 2010 (2010-11), pages 40-47, XP011337307, ISSN: 1540-7993, DOI: 10.1109/MSP.2010.187**

**Description**

Domaine technique

L'invention se rapporte à un procédé de stockage de données dans un système informatique effectuant une déduplication de données.

Rappelons qu'en informatique, une déduplication (également appelée factorisation ou stockage d'instance unique) est une technique de sauvegarde de données, consistant à factoriser des séquences de données identiques afin d'économiser l'espace mémoire utilisé.

Etat de la technique

Les systèmes de stockage en réseau actuels réalisent une déduplication des données avant stockage. Une déduplication consiste à détecter une redondance entre les données à sauvegarder dans un système informatique et des données déjà sauvegardées afin de ne stocker que la différence. Ainsi, si un premier dispositif requiert un stockage d'une donnée sur un deuxième dispositif, une déduplication est réalisée. Si la donnée à sauvegarder est déjà sauvegardée dans le deuxième dispositif relativement à un troisième dispositif, seule une référence à cette donnée est créée en liaison avec le premier dispositif. Ainsi, lorsque le premier dispositif souhaite accéder à la donnée, le deuxième dispositif utilise la référence et obtient la donnée. Le deuxième dispositif peut alors transmettre la donnée au premier dispositif.

Cette technique de déduplication assure un gain de l'ordre de 90% d'économie de stockage selon certaines applications.

L'opération de déduplication s'effectue soit du côté de la source, dans notre exemple le premier dispositif, soit du côté de la cible visée pour la sauvegarde, le deuxième dispositif dans notre exemple. Ce deuxième dispositif est généralement un serveur de stockage.

Si la déduplication s'effectue côté source, à savoir sur le premier dispositif, un programme client installé dans le premier dispositif effectue la déduplication avant de transmettre une donnée à sauvegarder au deuxième dispositif. Cette technique permet d'économiser efficacement la bande passante au niveau du premier dispositif.

Si la déduplication est réalisée dans le deuxième dispositif, à savoir le serveur, le programme client visé ci-dessus transmet la donnée à sauvegarder au deuxième dispositif qui réalisera la déduplication. Dans ce cas, toute la donnée est transmise ; il n'y a donc pas d'économie en bande passante au niveau du deuxième dispositif.

Plusieurs solutions unifiant déduplication et confidentialité des données existent.

Selon une première solution dite « Per-utilisateur encryption », le premier dispositif chiffre avec une clé privée la donnée à sauvegarder avant de la transmettre au deuxième dispositif. On suppose que le deuxième dispositif n'a pas connaissance de la clé publique correspondant à la clé privé. On suppose aussi que plusieurs premiers dispositifs peuvent requérir un stockage sur le deuxième dispositif, chaque dispositif disposant de son propre couple de clé privée / publique.

Dans cette configuration, une même donnée sauvegardée dans le deuxième dispositif relativement à un même utilisateur peut faire l'objet d'une déduplication. Cependant, une même donnée sauvegardée dans le deuxième dispositif relativement à deux utilisateurs différents ne pourra pas être détecté par le deuxième dispositif, ce dernier n'ayant pas connaissance des clés publiques requises pour le déchiffrement.

Avec cette première solution, la confidentialité des données est assurée mais cette méthode réduit l'efficacité de la déduplication dans le système car elle empêche la déduplication de données entre utilisateurs différents. En conséquence, du côté du deuxième dispositif, il n'y a aucune économie en bande passante et l'espace de stockage n'est pas géré de façon optimale car la déduplication de données appartenant à différents utilisateurs n'est pas effective.

Avec cette première solution, le programme client ne renvoie pas des données déjà transmises et stockées sur le deuxième dispositif. La bande passante au niveau du premier dispositif est donc optimisée.

Une deuxième solution a trait au chiffrement convergent. Le chiffrement convergent est une procédure de chiffrement conçue pour permettre une utilisation de la déduplication sur des contenus chiffrés par différents premiers dispositifs sous-entendu différents utilisateurs. Cette deuxième solution chiffre une donnée en fonction de son contenu. L'idée générale est qu'un utilisateur chiffre une donnée avec une fonction Hash puis utilise le résultat du chiffrement pour chiffrer la donnée. De cette manière, une même donnée chiffrée par deux utilisateurs différents sera identique après chiffrement ; de cette manière, le deuxième dispositif pourra effectuer une déduplication sur des données appartenant à des utilisateurs différents. Cette deuxième solution vise donc à unifier la déduplication inter-utilisateurs, c'est-à-dire entre différents utilisateurs, et la confidentialité des données. En conséquence, au niveau du deuxième dispositif, la bande passante n'est pas économisée. Par contre l'économie en espace de stockage est meilleure qu'en utilisant un chiffrement par utilisateur car une déduplication inter-utilisateurs est mise en oeuvre par le deuxième dispositif.

Au niveau du premier dispositif, cette deuxième solution permet d'économiser de la bande passante grâce à la déduplication faite du côté du second dispositif.

La méthode la plus sûre au niveau de la confidentialité parmi les approches existantes présentées ci-dessus est celle utilisant un chiffrement par utilisateur. Toutefois, cela réduit considérablement l'efficacité de la déduplication. Pour améliorer l'efficacité de la déduplication et garantir la confidentialité des données, le chiffrement convergent s'annonce meilleur que la première solution. Toutefois de récents travaux ont montré que la confidentialité en utilisant le chiffrement convergent pouvait être compromise. Rappelons que dans cette méthode dite à chiffrement convergent, à une donnée correspond un identifiant de donnée dont le calcul est fonction de la donnée ; l'identifiant et la donnée sont intimement liés. Cet identifiant est transmis en lieu et place de la donnée de façon à savoir si cette donnée est déjà stockée dans le second dispositif ; dans l'affirmative, c'est-à-dire que le deuxième dispositif stocke ce même identifiant, la donnée n'est pas transmise.

Dans cette méthode dite à chiffrement convergent, c'est le programme client installé dans le premier dispositif qui crée l'identifiant de donnée. En conséquence, des attaques malveillantes sont possibles. Par exemple, un utilisateur peut créer un identifiant aléatoire ID complètement indépendant de la donnée F à sauvegarder ; alors que, rappelons-le, l'identifiant devrait être calculé en fonction de la donnée. Le deuxième dispositif reçoit le couple ID/F (ID correspond à l'identifiant de la donnée, F à la donnée par exemple un fichier F) et stocke donc le couple ID/F. Plus tard, un autre utilisateur d'un autre dispositif souhaite stocker une donnée F' ; le programme client de cet autre utilisateur calcule correctement un identifiant à la base de la donnée (par exemple un hash de la donnée) et obtient un identifiant ID qui est le même que celui utilisé par le dispositif malveillant. Le deuxième dispositif reçoit l'identifiant ID et constate qu'il existe en mémoire. Le deuxième dispositif répond donc au premier dispositif que la donnée est déjà présente et qu'un téléchargement de la donnée n'est pas nécessaire. Plus tard, lorsque le premier dispositif requiert un téléchargement de la donnée, le premier dispositif reçoit la donnée F' issu du dispositif malveillant et non la donnée légitime F.

Un autre inconvénient est lié à l'observation du réseau par un tiers malveillant. En effet, lorsqu'un utilisateur sauvegarde une donnée dans le système, cet utilisateur peut observer le trafic réseau sortant et entrant sur le dispositif client et vérifier si la donnée est effectivement transmise au deuxième dispositif. Si ce n'est pas le cas, il en déduit qu'un autre utilisateur a déjà sauvegardé la donnée dans le système. Cela permet d'identifier des données déjà stockées par un système de stockage Le document EP2518647A1 décrit une autre solution impliquant un dispositif intermédiaire entre les premiers dispositifs utilisateurs et le serveur de stockage des sauvegardes. Le dispositif intermédiaire gère la déduplication avec le serveur de sauvegarde, mais requiert la réception de toutes les données à sauvegarder par les utilisateurs, même si celles-ci ont déjà été transmises auparavant. Un inconvénient est donc qu'aucune économie de bande passante entre les premiers dispositifs et le dispositif intermédiaire n'est possible.

L'invention offre une solution ne présentant pas les inconvénients de l'état de la technique.

L'invention

A cet effet, selon un aspect fonctionnel, l'invention a pour objet un procédé de stockage de données dans un système informatique tel que défini dans la revendication 1

Rappelons ici qu'une déduplication intra-utilisateurs a pour objet un déduplication qui s'opère sur des données d'un même utilisateur et qu'une déduplication inter-utilisateurs a pour objet une déduplication qui s'opère sur des données d'utilisateurs qui peuvent être différents.

La présence d'un dispositif intermédiaire permet une double déduplication à la fois entre données d'un même utilisateur (intra-utilisateurs) mais aussi entre différents utilisateurs (inter-utilisateurs).

Il en résulte, au niveau du premier dispositif, une économie de bande passante. En effet, lors d'une sauvegarde par un utilisateur, il n'est pas nécessaire de renvoyer toute la donnée s'il l'avait déjà envoyée lors d'une précédente sauvegarde. Seule la différence des données entre les précédentes sauvegardes et la sauvegarde courante est transmise.

Aussi, au niveau du second dispositif, il en résulte une économie en espace de stockage. En effet, le second dispositif réalise une déduplication inter-utilisateurs, et optimise donc son espace de stockage en ne stockant qu'un exemplaire de chaque donnée. Au niveau de ce second dispositif, la confidentialité des données sauvegardées est aussi assurée ; en effet, les données peuvent avantageusement être chiffrées selon le mode de chiffrement convergent décrit dans le paragraphe consacré à l'état de la technique. Le deuxième dispositif garanti donc la confidentialité des données aux utilisateurs ; seuls les utilisateurs autorisés peuvent avoir accès aux données en clair.

Il faut aussi noter que, dans la présente demande, un premier dispositif désigne indifféremment un dispositif de traitement de données ou un programme client.

Aussi, l'identifiant de la donnée sauvegardée sur le deuxième dispositif n'est pas créé par le premier dispositif mais un intermédiaire de confiance. L'identifiant n'est donc plus généré par un premier dispositif. Cela limite des attaques malveillantes par manipulation d'identifiant comme expliqué précédemment.

En outre, pour gérer la déduplication intra-utilisateur,

   a. le premier dispositif crée un premier identifiant lié à une donnée à sauvegarder,

b. le premier dispositif transmet l'identifiant au dispositif intermédiaire pour la gestion de la déduplication intra-utilisateur.

Le premier dispositif gère donc uniquement des identifiants qui ont traits à ses propres données et non à des données appartenant à d'autres utilisateurs.

Selon un premier mode de réalisation, qui pourra être mis en oeuvre alternativement ou cumulativement avec le précédent, le dispositif intermédiaire stocke une correspondance entre les identifiants liés à la déduplication intra-utilisateurs et les identifiants liés à la déduplication inter-utilisateurs. Le dispositif joue le rôle de mise en correspondance entre identifiants utilisés pour la déduplication intra-utilisateurs et inter-utilisateurs. Lorsque le dispositif intermédiaire reçoit un identifiant d'une donnée à sauvegarder depuis un premier dispositif et que cette donnée est déjà sauvegardée dans le deuxième dispositif, le dispositif intermédiaire peut retrouver, grâce à la correspondance, l'identifiant de la même donnée utilisé par le dispositif intermédiaire et le deuxième dispositif pour la gestion de la déduplication inter-utilisateurs. En d'autres mots, le programme client ne gère pas les identifiants liés à la déduplication inter-utilisateurs. Une attaque malveillante utilisant des identifiants aléatoires, telle que décrite dans la partie consacrée à l'état de la technique, n'est plus possible grâce à l'invention.

Selon un autre mode, qui pourra être mis en oeuvre alternativement ou cumulativement avec les précédents, le dispositif intermédiaire est situé sur la liaison de communication au travers de laquelle le premier dispositif communique avec le deuxième dispositif. De cette façon, le dispositif ne modifie pas le chemin, souvent le plus court, qu'empruntent les données échangées entre le premier et le deuxième dispositif. Ce dispositif intermédiaire si situe idéalement dans un lieu inaccessible par un utilisateur. Ce dispositif se situe par exemple dans le réseau d'un opérateur de télécommunications. Nous verrons dans la suite de la description qu'un dispositif intermédiaire est idéalement un dispositif (POP) apte à agréger des flux de données provenant d'une pluralité de premiers dispositifs. Un tel dispositif d'agrégation est par exemple un point de présence (POP) dans une infrastructure xDSL. L'avantage d'utiliser un point de présence POP est que ce dernier est un point de passage obligatoire des données issues ou destination de premiers dispositifs ; en conséquence, ce point de présence n'introduit aucune modification sur la longueur du chemin entre un utilisateur et le deuxième dispositif. De plus, en plaçant l'intermédiaire au niveau des points de présence POP, cela garantit que les données passent par un intermédiaire hors de portée des utilisateurs et complètement sécurisé.

D'autres dispositifs d'agrégation existent, en particulier un noeud de raccordement optique (NRO) dans un réseau de fibre optique d'un opérateur de télécommunications.

Selon un autre mode, qui pourra être mis en oeuvre alternativement ou cumulativement avec les précédent, à l'issue de la déduplication inter-utilisateurs, le dispositif intermédiaire transmet une information relative à la sauvegarde effectuée, en ce que l'instant de déclenchement de la transmission de l'information est retardée, notamment si la donnée est déjà stockée sur le deuxième dispositif. En effet, en observant la durée de réalisation de la déduplication, un utilisateur peut dans certains cas (notamment si la donnée est d'une grande taille) déduire qu'une déduplication inter-utilisateurs a eu lieu. Pour rendre complètement transparente la déduplication inter-utilisateurs sans consommer de ressources, l'intermédiaire rajoute si besoin de la latence au traitement d'une requête d'écriture d'une donnée de telle sorte qu'elle dure autant de temps qu'un enregistrement normal d'une donnée. De cette manière, un utilisateur ne peut pas déduire si la donnée à sauvegarder vient d'être écrite dans le deuxième dispositif ou si elle était déjà stockée.

Plus généralement, cet autre mode rend totalement transparente vis à vis des utilisateurs la déduplication inter-utilisateurs, ce qui n'est pas le cas des solutions existantes.

Selon un aspect matériel, l'invention a trait à un programme d'ordinateur comportant des instructions de code pour la mise en oeuvre du procédé selon l'une des revendications précédentes, lorsque ce programme est exécuté par un processeur.

Selon un autre aspect matériel, l'invention a trait à un support d'enregistrement lisible par un processeur de données sur lequel est enregistré un programme comprenant des instructions de code de programme pour l'exécution des étapes du procédé défini ci-dessus.

Selon un autre aspect matériel, l'invention a trait à un dispositif tel que défini dans la revendication 8.

Selon un autre aspect matériel, l'invention a trait à un système informatique tel que défini dans la revendication 9.

L'invention sera mieux comprise à la lecture de la description qui suit, donnée à titre d'exemple et faite en référence aux dessins annexés sur lesquels :

La figure 1 représente un système informatique sur lequel est illustré un exemple de réalisation de l'invention.

La figure 2 est une vue détaillée du système notamment du dispositif intermédiaire selon un mode de réalisation de l'invention.

La figure 3 est une vue schématique d'échanges ayant lieu lors d'une phase d'écriture d'une donnée sur un second dispositif.

La figure 4 est une vue schématique d'échanges ayant lieu lors d'une phase de lecture d'une donnée sur un second dispositif.

La figure 5 est une vue synthétique du système selon le mode de réalisation décrit.

Les figures 6a et 6b illustrent un autre mode de réalisation dans lequel le dispositif intermédiaire réalise les 2 phases décrites ci-dessus.

Description détaillée d'un exemple de réalisation illustrant l'invention

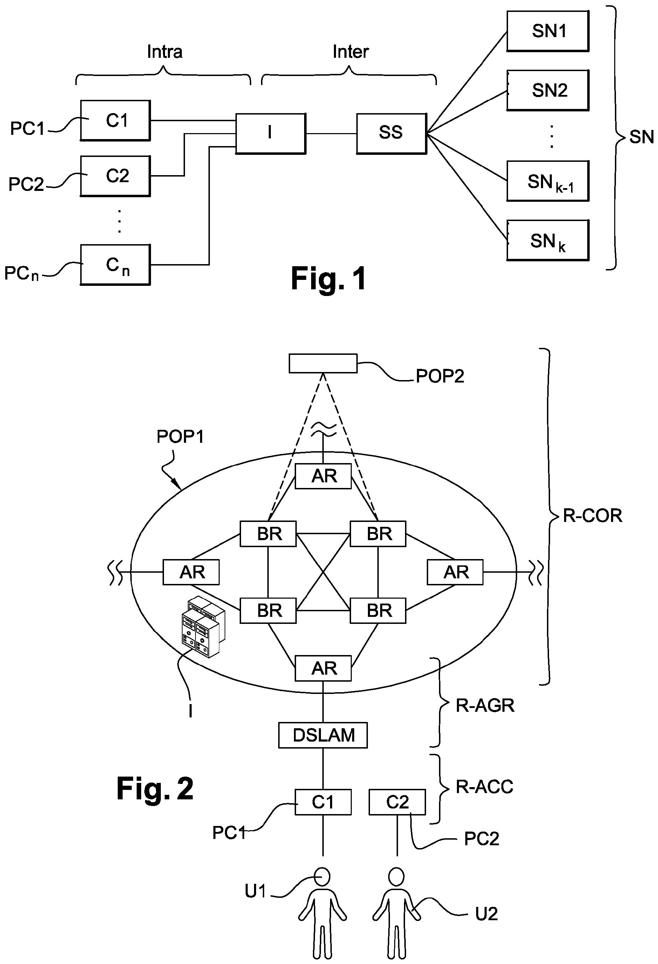

La figure 1 représente un système SYS informatique dans lequel l'invention peut être mise en oeuvre. Ce système comprend une pluralité de dispositifs de traitement de données (PC1,...PCn).

Pour simplifier l'exposé, les figures suivantes ne représentent que deux dispositifs, dits premiers dispositif PC1 et PC2.

Dans notre exemple de réalisation, Le système est basé sur une architecture réseau de type DSL d'un fournisseur d'accès. Cette architecture comprend

- des programmes clients C1 et C2 installés sur les premiers dispositifs PC1 et PC2, respectivement ;

- un dispositif intermédiaire I qui se charge de la déduplication de données d'un même utilisateur (intra-utilisateur) ; à un dispositif intermédiaire correspond un ou plusieurs programmes clients.

- un deuxième dispositif SS illustré par un serveur de stockage ; ce dernier se charge de la déduplication inter-utilisateurs entre des données d'une pluralité d'utilisateurs. Dans notre exemple, ce deuxième dispositif SS se charge aussi du stockage des données soit en local soit sur des noeuds de stockages (SN1, ..., SNk).

Rappelons que cette architecture de type DSL peut être décomposée de manière simplifiée en 3 couches, à savoir un réseau d'accès, un réseau d'agrégation et un coeur de réseaux. Ces différentes couches sont illustrées sur la figure 2. Sur cette figure est représenté un réseau d'accès R-ACC, un réseau d'agrégation R-AGR et un coeur de réseau R-COR.

Le réseau d'accès R-ACC comprend le plus souvent de passerelles (home gateways) installées chez des clients et de multiplexeurs DSLAMs connus de l'homme du métier. Les lignes des abonnés d'une région en provenance des passerelles sont agrégées dans les multiplexeurs DSLAMs. Les multiplexeurs DSLAMs ont des capacités d'agrégations d'une centaine à des milliers d'abonnés.

Le réseau d'agrégation R-AGR regroupe les multiplexeurs DSLAMs et les points de présence (POP). Les lignes collectées par les multiplexeurs DSLAMs sont agrégées à un second niveau dans les POP.

Enfin, le coeur de réseau R-COR comprend plusieurs Points de Présences (POP). Les point de présence POP peuvent agrégés des flux provenant de dizaines de multiplexeurs DSLAMs. Rappelons qu'un point de Présence (point de présence POP) comprend un ensemble de routeurs interconnectés à un même endroit (immeuble, salle...). Ils sont équipés de ressources physiques et logiciels dédiés au routage. On distingue 2 types de routeurs à savoir les routeurs d'accès AR et les routeurs de coeurs BR. Les routeurs d'accès sont connectés aux réseaux d'agrégation. Ces routeurs d'accès sont à leur tour connectés aux routeurs de coeur.

Chaque routeur d'accès à l'intérieur d'un point de présence POP est connecté à au moins deux routeurs de coeur BR pour assurer une protection en cas de pannes à l'intérieur d'un point de présence POP. Les différents routeurs de coeurs BR sont connectés entre eux en un réseau maillé (Mesh network). Les points de présence POP donnent accès au réseau IP du fournisseur d'accès à Internet.

La déduplication peut être faite à différents niveaux de granularité des données, par exemple au niveau fichier, au niveau d'un bloc, au niveau octet. Dans la suite, une donnée D va faire l'objet d'une sauvegarde.

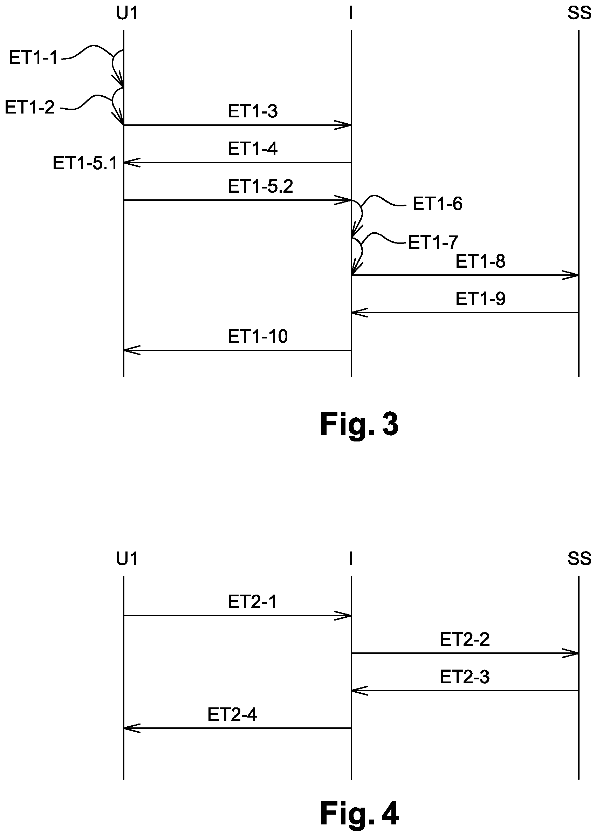

Un mode de réalisation d'une phase d'écriture d'une donnée va être décrit en référence à la figure 3. Ce mode comprend plusieurs étapes référencées ET1-k (k=1 à 10) sur la figure 3.

On suppose qu'un utilisateur U1 avec un identifiant IDU souhaite sauvegarder une donnée D dans un espace de stockage SNk géré par le deuxième dispositif SS.

Selon le procédé, en référence à la figure 1, un dispositif intermédiaire I va gérer les déduplications intra-utilisateurs INTRA, et le serveur SS va gérer les déduplications inter-utilisateurs INTER.

La localisation du dispositif intermédiaire dans le réseau peut varier ; il peut se situer dans un premier dispositif PC1/PC2, dans le deuxième dispositif SS ou sur un dispositif intermédiaire du réseau. Nous verrons dans la suite qu'un dispositif intermédiaire est choisi judicieusement en particulier en vue d'augmenter la bande passante au niveau d'un second dispositif car c'est à ce niveau que le volume de données est le plus important.

Dans notre exemple, un multiplexeur POP est le lieu choisi pour illustrer le mode de réalisation. Un multiplexeur POP a l'avantage d'être à la fois un dispositif de confiance car situé dans une zone de confiance, à savoir dans le réseau coeur ; et dans ce réseau au plus près des premiers dispositifs.

La donnée D peut être transmise en clair, c'est-à-dire de façon non chiffrée ; cependant pour assurer la confidentialité, dans notre exemple, la donnée est chiffrée au moyen d'un algorithme de chiffrement connu de l'homme du métier.

Dans la suite, une primitive peut être écrite de la façon suivante

Send(src, dest, COMMAND, param_1, param_2,.., param_N) :

Cette primitive est utilisée pour désigner une commande de transmission de paramètres depuis une source « src », par exemple un premier dispositif, vers une destination « dest », par exemple un dispositif intermédiaire.

Dans la suite :

- Hash(D) désignera une fonction de hachage et D la donnée à laquelle est appliquée la fonction de hachage ;

- Easym désignera une fonction de chiffrement asymétrique ;

- Esym désignera une fonction de chiffrement symétrique

Dans notre exemple, chaque utilisateur U1 et U2 possède une clé publique et une clé privée.

Les étapes sont les suivantes :

Lors d'une première étape ET1-1, dans notre exemple, le programme client C1 de l'utilisateur U1 crée un hash de la donnée D à envoyer :

$$HD = Hash(D)$$

Lors d'une deuxième étape ET1-2, optionnellement, le programme client C1 de l'utilisateur U1 crée l'identifiant IDD de la donnée D qui servira à gérer une déduplication intra-utilisateur sur le dispositif intermédiaire I. Cette étape est optionnelle mais conseillée car comparer chaque bit d'une donnée, surtout si le nombre de bits est important, peut s'avérer très long et coûteux en terme de consommation de ressources informatiques. Aussi, l'utilisation d'un identifiant évite pour un premier dispositif de transmettre toute la donnée alors que cette donnée a déjà fait l'objet d'une sauvegarde.

Dans notre exemple, comme la déduplication entre le premier dispositif PC1 et le dispositif intermédiaire I est intra-utilisateur, c'est-à-dire entre des données appartenant à un même utilisateur, l'identifiant est créé de telle sorte que des collisions entre identifiants de données différents créés par un même utilisateur ne soient pas possibles. Par exemple, l'identifiant peut être un hachage prenant en compte la valeur HD créée à l'étape 1 et de l'identifiant de l'utilisateur IDU. L'opération de hachage peut être notée de la façon suivante :

$$IDD = Hash(IDU, HD)$$

Lors d'une troisième étape ET1-3, le programme client C1 de l'utilisateur U1 transmet à l'intermédiaire I l'identifiant IDD de la donnée D afin de vérifier qu'il ne possède pas déjà cette donnée D.

Plus précisément la primitive transmise peut prendre la forme suivante :

Send(IDU, I, CHECK, IDD)

La primitive inclut :

- l'identifiant de l'utilisateur IDU,

- un identifiant de l'intermédiaire IDI,

- L'identifiant de la donnée IDD,

- une commande CHECK requérant une vérification de la présence ou nom de l'identifiant IDD au niveau du dispositif intermédiaire.

Lors d'une quatrième étape ET1-4 : A réception, le dispositif intermédiaire I vérifie dans l'index des données de l'utilisateur U1 si l'identifiant IDD existe ou pas.

- Si IDD existe dans l'index de l'utilisateur U1, le dispositif intermédiaire I répond au programme client C1 de l'utilisateur U1 qu'il n'est pas nécessaire de transmettre la donnée D. L'opération de sauvegarde de la donnée D se termine.

- Sinon, le dispositif intermédiaire I répond au programme client C1 de l'utilisateur U1 qu'il doit transmettre la donnée, dans notre exemple la donnée chiffrée, et sa clé chiffrée de déchiffrement.

Cette étape peut être illustrée par la syntaxe suivante:

```
If index.get(IDU).contains(IDD)
     Send(I, IDU, IDD, CHECK_RESPONSE, YES)
Else
     Send(l, IDU, IDD, CHECK_RESPONSE, NO)
```

Lors d'une cinquième étape ET1-5.1, lorsque le programme client C1 de l'utilisateur U1 obtient la réponse du dispositif intermédiaire I ; Si l'identifiant IDD existe déjà, la sauvegarde est considérée comme effectuée et l'opération se termine.

Si l'identifiant IDD n'existe pas, le programme client C1 de l'utilisateur U1 transmet, lors d'une étape ET1-5.2, la donnée D chiffrée et sa clé chiffrée de déchiffrement.

Le programme client C1 de l'utilisateur U1 chiffre la donnée D avec la clé HD pour obtenir une donnée chiffrée DE puis chiffre la clé HD avec sa clé publique Ku_pub pour obtenir HDE afin que seul lui, c'est-à-dire le programme client C1 de l'utilisateur U1, n'aie accès à la clé de déchiffrement en clair. Le programme client C1 de l'utilisateur U1 transmet ensuite la donnée chiffrée DE et la clé chiffrée de déchiffrement HDE.

Ces dernières étapes peuvent être illustrées par la syntaxe suivante:

```
If IDD exists
Fin de la sauvegarde (ET1-5.1)
Else (ET1-5.2)
```

$$DE = Esym(HD, D)$$

$$HDE = Easym(Ku\_pub, HD)$$

Send(IDU, I, PUT, IDD, HDE, DE)

A ce stade, une première phase de déduplication est terminée.

Une deuxième phase démarre au cours de laquelle une déduplication inter-utilisateurs va être réalisée.

Lors d'une sixième étape ET1-6, lorsque le dispositif intermédiaire I reçoit la donnée, il crée un hash de DE pour créer un identifiant système IDD_sys qui servira à la gestion de la déduplication inter-utilisateurs au niveau du deuxième dispositif SS. Toutes les données étant chiffrées de la même manière par tous les utilisateurs U1 et U2, deux fichiers égaux avant le chiffrement seront toujours égaux après le chiffrement et auront ainsi le même identifiant système.

$$IDD\_sys = Hash(DE)$$

Lors d'une septième étape ET1-7, le dispositif intermédiaire I met à jour son index concernant la sauvegarde de IDD par U1 et l'identifiant système IDD_sys attribué à la donnée D.

Index.update(IDU, IDD, IDD_sys)

A ce stade, dans notre exemple, au moins trois identifiants coexistent au niveau du dispositif intermédiaire à savoir l'identifiant IDU de l'utilisateur U1, l'identifiant IDD de la donnée D et l'identifiant système IDD_sys.

Lors d'une huitième étape ET1-8, le dispositif intermédiaire I vérifie dans son index si IDD_sys existe ou pas.

- Si IDD_sys existe (relativement à un autre utilisateur) dans le système, cela veut dire que la donnée est déjà stockée sur un noeud de stockage SNk et qu'il n'est pas nécessaire de la restocker. Le dispositif intermédiaire I transmet alors juste une référence de la donnée DE au serveur SS ainsi que la clé chiffrée de déchiffrement HDE.

- - Si IDD_sys n'existe pas, la donnée DE n'est donc pas stockée sur les noeuds de stockage SNk ; DE et HDE sont alors transmis au serveur SS.

Cette étape peut être illustrée par la syntaxe suivante:

```
If IDD_sys exists
      Send(I, FSS, PUT, IDU, IDD, IDD_sys, HDE)
Else
Send(I, FSS, PUT, IDU, IDD, IDD_sys, HDE, DE)
```

Lors d'une neuvième étape ET1-9, le serveur SS notifie au dispositif intermédiaire I que la sauvegarde a bien été effectuée.

Send(FSS, I, PUT_ACK, IDU, IDD, IDD_sys, OK)

Lors d'une dixième étape ET1-10, le dispositif intermédiaire I notifie au programme client de l'utilisateur U1 de la fin de la sauvegarde de DE.

Cette étape peut être illustrée par la syntaxe suivante:

Send(I, IDU, PUT_ACK, IDD, OK)

Cette phase d'écriture peut être suivie d'une phase de lecture d'une donnée faisant intervenir le dispositif intermédiaire I. cette phase de lecture va être décrite en référence à la figure 4 qui comprend des étapes référencées ET2-j sur la figure 4.

Les étapes précédentes illustrent la phase d'écriture. Les étapes suivantes illustrent une phase de lecture de la donnée D.

Lors d'une première étape ET 2-1 de cette phase de lecture, le programme client C1 de l'utilisateur U1 transmet au dispositif intermédiaire I l'identifiant IDD de la donnée D qu'il souhaite récupérer, à savoir IDD. Cette étape peut être illustrée par la syntaxe suivante:

Send(IDU, I, GET, IDD)

Le dispositif intermédiaire I recherche ensuite l'identifiant IDD dans l'index utilisateur U1.

Si l'identifiant IDD existe dans les données de l'utilisateur U1, le dispositif intermédiaire I recherche l'identifiant système IDD_sys qui correspond à l'identifiant IDD dans un index système. L'index système peut être représenté au moyen d'une table de correspondance entre des identifiants résultant de la déduplication intra-utilisateurs, par exemple IDD, et des identifiants système IDD_sys.

Une fois l'identifiant système IDD_sys trouvé, la donnée chiffrée DE ainsi que la clé chiffrée de déchiffrement de D sont récupérés sur le serveur SS lors d'une deuxième étape ET2-2 et transmis à l'utilisateur U1 lors d'une troisième étape ET2-3. Si l'identifiant IDD n'existe pas dans les données de l'utilisateur U1, une réponse négative est transmise à l'utilisateur U1 lors d'une quatrième étape ET2-4 de cette phase de lecture.

Nous résumons les étapes précédentes de cette phase de lecture par le code ci-dessous exécuté par le dispositif intermédiaire I

```
If Index_Utilisateurs.get(IDU).contains(IDD)
IDD_sys = Index_Utilisateurs.getSystem_Index(IDU, IDD)
      HDE, DE = Send(I, FSS, GET, IDU, IDD, IDD_sys)
(ET2.2et ET2.3)
      Send(I, IDU, GET_RESPONSE, IDD, HDE, DE)
(ET 2.4)
 Else
      Send(I, IDU, GET_RESPONSE, IDD, NO)
(ET2.4)
```

Nous avons vu, dans ce qui précède, que l'intermédiaire a un intérêt à être placé au niveau d'un point de présence POP. Cependant un autre lieu peut être envisageable.

Aussi, le nombre de dispositifs intermédiaires I est quelconque. Un seul dispositif intermédiaire peut être envisageable ; cependant, de manière à réduire la consommation de ressources sur un dispositif intermédiaire, il est préférable de prévoir la gestion de la déduplication intra-utilisateurs sur plusieurs dispositifs intermédiaires et d'associer plusieurs premiers dispositifs à un même dispositif intermédiaire.

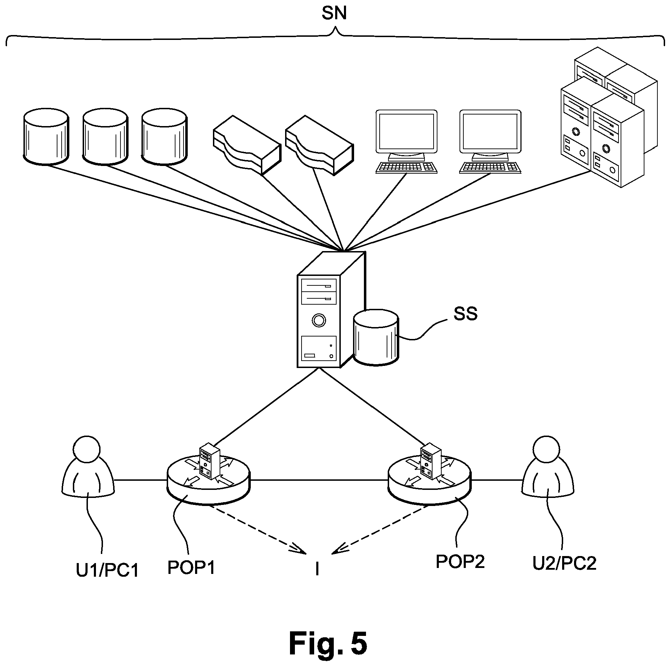

Nous avons vu aussi dans ce qui précède, en référence à la figure 5, que le point de présence POP et le serveur de stockage SS sont des noeuds distincts sur le réseau.

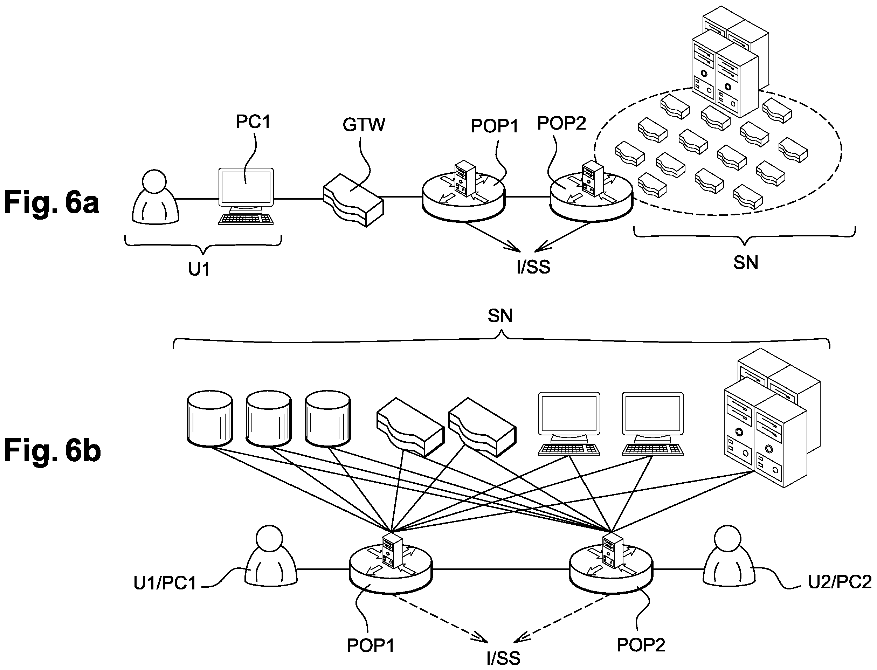

Cependant, en référence à la figure 6a ou 6b, un dispositif intermédiaire POP2 peut jouer le rôle à la fois d'intermédiaire I pour la réalisation de l'opération de déduplication et de serveur de stockage SS.

Sur la figure 6a sont représentés deux dispositifs intermédiaires, à savoir un premier POP1 et un deuxième PO2 Dans cette configuration, lorsque le premier dispositif intermédiaire POP1 reçoit une requête issue d'un programme client C1 qui lui est associé, par exemple depuis un programme client inclus dans un PC1 d'une même région géographique, le dispositif intermédiaire POP1 réalise l'opération de déduplication de données. Lorsque le second dispositif intermédiaire POP2 reçoit une requête du premier dispositif intermédiaire POP1, le second dispositif intermédiaire POP2 agit dans ce cas uniquement comme un serveur de stockage SS. A noter que sur la figure 6a, une passerelle domestique GTW se situe entre le premier dispositif PC1 et le point POP1.

Sur la figure 6b sont représentés deux dispositifs intermédiaires, à savoir un premier dispositif POP1 et un deuxième dispositif PO2. Dans cet exemple, les deux dispositifs gèrent à la fois la déduplication et le stockage sur les noeuds de stockage SN.

On a vu précédemment qu'à l'étape 10, le dispositif intermédiaire I notifie au programme client de l'utilisateur U1 de la fin de la sauvegarde de DE. On a vu, en référence à l'état de la technique, que par l'observation du réseau un utilisateur peut observer le trafic réseau sortant et entrant sur le dispositif client et vérifier si une donnée à sauvegarder est effectivement transmise au deuxième dispositif. Si ce n'est pas le cas, il en déduit qu'un autre utilisateur a déjà sauvegardé le fichier dans le système. Cela permet d'identifier des fichiers déjà stockés par un système de stockage. Dans cette configuration, selon une variante, l'instant de déclenchement de la transmission de la réponse est retardé, en particulier si la donnée est déjà stockée sur le deuxième dispositif. En effet, la durée de la déduplication varie selon que la donnée est déjà ou non présente sur le deuxième dispositif. L'instant de déclenchement est donc choisi de telle sorte que la durée globale entre la transmission de la demande et la réception de la réponse à l'étape 10 est plus ou moins la même. Cette caractéristique permet de masquer au premier dispositif qu'une déduplication inter-utilisateurs a été effectuée. Selon une autre variante, l'instant de transmission peut être aléatoire de manière à masquer encore une fois la durée de traitement effective de l'opération de déduplication.

Notons qu'un dispositif intermédiaire possède les modules suivants (non représentés sur les figures) pour la réalisation du procédé de l'invention :

a. Un premier module de gestion de déduplication intra-utilisateurs sur des données à sauvegarder en provenance de premiers dispositifs,

b. un second module de gestion de la déduplication inter-utilisateurs en coopération avec le second dispositif.

A noter que le terme « module » utilisé dans ce document, peut correspondre soit à un composant logiciel, soit à un composant matériel, soit encore à un ensemble de composants matériels et/ou logiciels, aptes à mettre en oeuvre la ou les fonctions décrites pour le module.

Précisons encore que l'exemple de réalisation décrit ci-dessus se base sur une architecture DSL. Cependant, l'invention peut être mise en oeuvre dans d'autres architectures dans lesquels une déduplication de données est possible, par exemple un réseau de fibre optique.

## Revendications

**1.** Procédé de stockage de données dans un système informatique (SYS) comprenant une pluralité de premiers dispositifs (PC1,PC2) stockant des données appartenant à des utilisateurs respectifs (U1,U2), un second dispositif (SS) apte à gérer une sauvegarde de données issues de premiers dispositifs, ladite sauvegarde comprenant une étape de déduplication de données inter-utilisateurs, **caractérisé en ce qu'**un dispositif intermédiaire (I) s'intercale entre des premiers dispositifs (PC1 ,PC2) et le deuxième dispositif (SS), de manière à réaliser une déduplication intra-utilisateur sur des données à sauvegarder en provenance de premiers dispositifs, le procédé comprenant pour gérer la déduplication intra-utilisateur,

- une étape de création par les premiers dispositifs de premiers identifiants (IDD) des données à sauvegarder, le calcul desdits premiers identifiants étant fonction des données (D) respectives à sauvegarder, et
- une étape de transmission, lors de la sauvegarde d'une donnée par un premier dispositif, dudit premier identifiant de cette donnée au dispositif intermédiaire;

le dispositif intermédiaire réalisant, lors de la réception d'une demande de sauvegarde d'une donnée (D), une étape de réception dudit premier identifiant de cette donnée et une étape de vérification si ce premier identifiant existe pour l'utilisateur de la donnée, et si non, des étapes de requête, à destination dudit premier dispositif, de transmission de ladite donnée (D) vers le dispositif intermédiaire (I) et de stockage dudit premier identifiant en association avec l'utilisateur de la donnée dans le dispositif intermédiaire;
le dispositif intermédiaire réalisant en outre pour gérer ensuite la déduplication inter-utilisateurs les étapes suivantes:

a. une étape de création d'un deuxième identifiant (IDsys) dont le calcul est fonction de la donnée (D) à sauvegarder reçue depuis le premier dispositif, et

b. une étape de transmission au cours de laquelle le dispositif intermédiaire (I) transmet au moins le second identifiant (IDsys) au deuxième dispositif (SS) pour la gestion de la déduplication inter-utilisateurs de la donnée (DE).

2. Procédé de stockage selon la revendication 1, **caractérisé en ce que** le dispositif intermédiaire stocke une correspondance entre les identifiants liés à la déduplication intra-utilisateurs et les identifiants liés à la déduplication inter-utilisateurs

3. Procédé de stockage selon la revendication 1, **caractérisé en ce que** le dispositif intermédiaire (I) est situé sur la liaison de communication au travers de laquelle le premier dispositif communique avec le deuxième dispositif.

4. Procédé de stockage selon la revendication 3, **caractérisé en ce que**, sur la liaison, le dispositif intermédiaire (POP) est un dispositif apte à agréger des flux de données provenant de premiers dispositifs.

5. Procédé de stockage selon la revendication 1, **caractérisé en ce que**, à l'issue de la déduplication inter-utilisateurs, le dispositif intermédiaire (I) transmet une information relative à la sauvegarde effectuée, et **en ce que** l'instant de déclenchement de la transmission de l'information est retardé.

6. Programme d'ordinateur comportant des instructions de code pour la mise en oeuvre du procédé selon l'une des revendications précédentes, lorsque ce programme est exécuté par un processeur.

7. Dispositif (I) comprenant un module de communication pour communiquer avec une pluralité de premiers dispositifs (PC1) comprenant des modules de stockage respectifs pour le stockage de données appartenant à des utilisateurs respectifs (U1) et avec un second dispositif (SS) apte à gérer une sauvegarde de données issues de premiers dispositifs, ladite sauvegarde comprenant une étape de déduplication de données inter-utilisateurs, le dispositif comprenant, pour gérer la déduplication intra-utilisateur,

- des moyens de réception de demandes de sauvegarde de données (D) issues des premiers dispositifs, chaque demande comprenant un premier identifiant (IDD) de la donnée respective à sauvegarder créé par le premier dispositif émettant la demande, le calcul dudit premier identifiant étant fonction de la donnée (D), et
- des moyens de vérification si ce premier identifiant existe pour l'utilisateur de la donnée, et si non, d'invoquer des moyens de requête, à destination dudit premier dispositif, de transmission de ladite donnée (D) vers le dispositif intermédiaire et des moyens de stockage dudit premier identifiant en association avec l'utilisateur de la donnée dans le dispositif intermédiaire;

le dispositif intermédiaire comprenant en outre pour gérer ensuite la déduplication inter-utilisateurs:

a. des moyens de création d'un deuxième identifiant (IDsys) dont le calcul est fonction de la donnée (D) à sauvegarder reçue depuis le premier dispositif,
b. des moyens de transmission pour transmettre au moins le second identifiant (IDsys) au deuxième dispositif (SS) pour la gestion de la déduplication inter-utilisateurs de la donnée (DE).

8. Système informatique (SYS) comprenant une pluralité de premiers dispositifs (PC1) comprenant des modules de stockage respectifs pour le stockage de données appartenant à des utilisateurs respectifs (U1), un second dispositif (SS) apte à gérer une sauvegarde de données issues de premiers dispositifs, ladite sauvegarde comprenant une étape de déduplication de données inter-utilisateurs dans laquelle des premiers identifiants dont le calcul est fonction des données à sauvegarder (D) sont créés par des premiers dispositifs, **caractérisé en ce qu'**il comprend un dispositif intermédiaire selon la revendication 8 s'intercalant entre des premiers dispositifs et le deuxième dispositif.

**Patentansprüche**

1. Verfahren zur Speicherung von Daten in einem Computersystem (SYS), das mehrere erste Vorrichtungen (PC1, PC2), die jeweiligen Benutzern (U1, U2) gehörende Daten speichern, und eine zweite Vorrichtung (SS), die in der Lage ist, eine Sicherung von von ersten Vorrichtungen stammenden Daten zu verwalten, umfasst, wobei die Sicherung einen Schritt der Deduplizierung von benutzerübergreifenden Daten umfasst, **dadurch gekennzeichnet, dass** eine Zwischenvorrichtung (I) zwischen ersten Vorrichtungen (PC1, PC2) und der zweiten Vorrichtung (SS) eingefügt ist, um so eine benutzerinterne Deduplizierung von zu sichernden Daten durchzuführen, die von ersten Vorrichtungen stammen,

wobei das Verfahren umfasst, um die benutzerinterne Deduplizierung zu verwalten,

- einen Schritt der Erzeugung, durch die ersten Vorrichtungen, von ersten Kennungen (IDD) der zu sichernden Daten, wobei die Berechnung der ersten Kennungen von den jeweiligen zu sichernden Daten (D) abhängig ist, und

- einen Schritt der Übertragung, bei der Sicherung eines Datenelements durch eine erste Vorrichtung, der ersten Kennung dieses Datenelements an die Zwischenvorrichtung;

wobei die Zwischenvorrichtung beim Empfang einer Anfrage zur Sicherung eines Datenelements (D) einen Schritt des Empfangs der ersten Kennung dieses Datenelements und einen Schritt der Überprüfung, ob diese erste Kennung für den Benutzer des Datenelements existiert, durchführt, und falls nicht, Schritte der Anforderung, von der ersten Vorrichtung, einer Übertragung dieses Datenelements (D) an die Zwischenvorrichtung (I) und der Speicherung der ersten Kennung in Verbindung mit dem Benutzer des Datenelements in der Zwischenvorrichtung;

wobei die Zwischenvorrichtung außerdem, um anschließend die benutzerübergreifende Deduplizierung zu verwalten, die folgenden Schritte durchführt:

a. einen Schritt der Erzeugung einer zweiten Kennung (IDsys), deren Berechnung von dem zu sichernden Datenelement (D) abhängig ist, das von der ersten Vorrichtung empfangen wurde, und

b. einen Schritt der Übertragung, in welchem die Zwischenvorrichtung (I) wenigstens die zweite Kennung (IDsys) an die zweite Vorrichtung (SS) überträgt, zur Verwaltung der benutzerübergreifenden Deduplizierung des Datenelements (DE).

2. Verfahren zur Speicherung nach Anspruch 1, **dadurch gekennzeichnet, dass** die Zwischenvorrichtung eine Entsprechung zwischen den Kennungen, die mit der benutzerinternen Deduplizierung zusammenhängen, und den Kennungen, die mit der benutzerübergreifenden Deduplizierung zusammenhängen, speichert.

3. Verfahren zur Speicherung nach Anspruch 1, **dadurch gekennzeichnet, dass** sich die Zwischenvorrichtung (I) auf der Kommunikationsverbindung befindet, über welche die erste Vorrichtung mit der zweiten Vorrichtung kommuniziert.

4. Verfahren zur Speicherung nach Anspruch 3, **dadurch gekennzeichnet, dass** auf der Verbindung die Zwischenvorrichtung (POP) eine Vorrichtung ist, die in der Lage ist, von ersten Vorrichtungen kommende Datenströme zu aggregieren.

5. Verfahren zur Speicherung nach Anspruch 1, **dadurch gekennzeichnet, dass** nach Abschluss der benutzerübergreifenden Deduplizierung die Zwischenvorrichtung (I) eine Information überträgt, die sich auf die durchgeführte Sicherung bezieht, und dadurch, dass der Zeitpunkt der Auslösung der Übertragung der Information verzögert wird.

6. Computerprogramm, welches Codeanweisungen für die Durchführung des Verfahrens nach einem der vorhergehenden Ansprüche, wenn dieses Programm von einem Prozessor ausgeführt wird, umfasst.

7. Vorrichtung (I), welche ein Kommunikationsmodul zum Kommunizieren mit mehreren ersten Vorrichtungen (PC1), die jeweilige Speichermodule zur Speicherung von jeweiligen Benutzern (U1) gehörenden Daten umfassen, und mit einer zweiten Vorrichtung (SS), die in der Lage ist, eine Sicherung von von ersten Vorrichtungen stammenden Daten zu verwalten, umfasst, wobei die Sicherung einen Schritt der Deduplizierung von benutzerübergreifenden Daten umfasst,

wobei die Vorrichtung umfasst, um die benutzerinterne Deduplizierung zu verwalten,

- Mittel zum Empfang von Anfragen von den ersten Vorrichtungen zur Sicherung von Daten (D), wobei jede Anfrage eine erste Kennung (IDD) des jeweiligen zu sichernden Datenelements umfasst, die von der ersten Vorrichtung erzeugt wurde, welche die Anfrage sendet, wobei die Berechnung der ersten Kennungen von dem Datenelement (D) abhängig ist, und

- Mittel zur Überprüfung, ob diese erste Kennung für den Benutzer des Datenelements existiert, und falls nicht, zum Aufrufen von Mitteln zur Anforderung, von der ersten Vorrichtung, einer Übertragung dieses Datenelements (D) an die Zwischenvorrichtung, und von Mitteln zur Speicherung der ersten Kennung in Verbindung mit dem Benutzer des Datenelements in der Zwischenvorrichtung;

wobei die Zwischenvorrichtung außerdem, um anschließend die benutzerübergreifende Deduplizierung zu verwalten, umfasst:

a. Mittel zur Erzeugung einer zweiten Kennung (IDsys), deren Berechnung von dem zu sichernden Datenelement (D) abhängig ist, das von der ersten Vorrichtung empfangen wurde,
b. Übertragungsmittel zum Übertragen wenigstens der zweiten Kennung (IDsys) an die zweite Vorrichtung (SS) zur Verwaltung der benutzerübergreifenden Deduplizierung des Datenelements (DE).

8. Computersystem (SYS), welches mehrere erste Vorrichtungen (PC1), die jeweilige Speichermodule zur Speicherung von jeweiligen Benutzern (U1) gehörenden Daten umfassen, und eine zweite Vorrichtung (SS), die in der Lage ist, eine Sicherung von von ersten Vorrichtungen stammenden Daten zu verwalten, umfasst, wobei die Sicherung einen Schritt der Deduplizierung von benutzerübergreifenden Daten umfasst, in welchem erste Kennungen, deren Berechnung von den zu sichernden Daten (D) abhängig ist, von ersten Vorrichtungen erzeugt werden, **dadurch gekennzeichnet, dass** es eine Zwischenvorrichtung nach Anspruch 8 umfasst, die zwischen ersten Vorrichtungen und der zweiten Vorrichtung eingefügt ist.

## Claims

1. Method for storing data in a computer system (SYS) comprising a plurality of first devices (PC1, PC2) storing data belonging to respective users (U1, U2), a second device (SS) able to manage a saving of data arising from first devices, said saving comprising a step of deduplicating inter-user data, **characterized in that** an intermediate device (I) is inserted between first devices (PC1, PC2) and the second device (SS), in such a way as to carry out an intra-user deduplication on data to be saved originating from first devices, the method comprising in order to manage the intra-user deduplication,

- a step of creation by the first devices of first identifiers (IDD) of the data to be saved, the calculation of said first identifiers being dependent on the respective data (D) to be saved, and
- a step of transmission, during the saving of a datum by a first device, of said first identifier of this datum to the intermediate device;

the intermediate device carrying out, upon receipt of a request for saving a datum (D), a step of reception of said first identifier of this datum and a step of verification if this first identifier exists for the user of the datum, and if not, steps of request, destined for said first device, of transmission of said datum (D) to the intermediate device (I) and of storage of said first identifier in association with the user of the datum in the intermediate device;
the intermediate device furthermore carrying out in order to thereafter manage the inter-user deduplication the following steps:

a. a step of creation of a second identifier (IDsys) whose calculation is dependent on the datum (D) to be saved received from the first device, and
b. a step of transmission in the course of which the intermediate device (I) transmits at least the second identifier (IDsys) to the second device (SS) for the management of the inter-user deduplication of the datum (DE).

2. Method of storage according to Claim 1, **characterized in that** the intermediate device stores a correspondence between the identifiers related to the intra-user deduplication and the identifiers related to the inter-user deduplication.

3. Method of storage according to Claim 1, **characterized in that** the intermediate device (I) is situated on the communication link across which the first device communicates with the second device.

4. Method of storage according to Claim 3, **characterized in that**, on the link, the intermediate device (POP) is a device able to aggregate data streams originating from first devices.

5. Method of storage according to Claim 1, **characterized in that**, on completion of the inter-user deduplication, the intermediate device (I) transmits an information item relating to the save performed, and **in that** the instant of triggering of the transmission of the information item is delayed.

6. Computer program comprising code instructions for the implementation of the method according to one of the preceding claims, when this program is executed by a processor.

7. Device (I) comprising a communication module for communicating with a plurality of first devices (PC1) comprising respective storage modules for the storage of data belonging to respective users (U1)and with a second device (SS) able to manage a saving of data arising from first devices, said saving comprising a step of deduplication of inter-user data,

the device comprising, in order to manage the intra-user deduplication,

- means for receiving requests for saving of data (D) arising from the first devices, each request comprising a first identifier (IDD) of the respective datum to be saved and created by the first device issuing the request, the calculation of said first identifier being dependent on the datum (D), and
- means for verification if this first identifier exists for the user of the datum, and if not, of invoking means of request, destined for said first device, for transmission of said datum (D) to the intermediate device and means for storage of said first identifier in association with the user of the datum in the intermediate device;

the intermediate device furthermore comprising in order to manage thereafter the inter-user deduplication:

a. means for creation of a second identifier (IDsys) whose calculation is dependent on the datum (D) to be saved received from the first device, and
b. means for transmission in order to transmit at least the second identifier (IDsys) to the second device (SS) for the management of the inter-user deduplication of the datum (DE).

8. Computer system (SYS) comprising a plurality of first devices (PC1) comprising respective storage modules for storage of data belonging to respective users (U1), a second device (SS) able to manage a saving of data arising from first devices, said saving comprising a step of deduplication of inter-user data in which first identifiers whose calculation is dependent on the data to be saved (D) are created by first devices, **characterized in that** it comprises an intermediate device according to Claim 8 inserted between first devices and the second device.

Intra       Inter

PC1 — C1

PC2 — C2

PCn — Cn

I

SS

SN1

SN2

SN$_{k-1}$

SN$_k$

SN

## Fig. 1

POP2

POP1

R-COR

AR

BR   BR

AR       AR

BR   BR

AR

I

R-AGR

DSLAM

## Fig. 2

R-ACC

C1    C2

PC1       PC2

U1     U2

**Fig. 3**

**Fig. 4**

**Fig. 5**

**Fig. 6a**

PC1  GTW  POP1  POP2

U1  I/SS  SN

**Fig. 6b**

SN

U1/PC1  POP1  I/SS  POP2  U2/PC2

EP 2 979 222 B1

**EP 2 979 222 B1**

## RÉFÉRENCES CITÉES DANS LA DESCRIPTION

**Documents brevets cités dans la description**

- EP 2518647 A1